# EUROPÄISCHE PATENTANMELDUNG

(11) **EP 3 035 009 A1**
(43) Veröffentlichungstag der Anmeldung: **22.06.2016**
(21) Anmeldenummer: 14198998.8
(22) Anmeldetag: 18.12.2014
(51) Int. Cl.: G01F 11/04, G01F 11/26, G01F 11/28

(54) **Flüssigkeitsspender und Indikatoreinrichtung**

(71) Anmelder: Aptar Radolfzell GmbH, 78315 Radolfzell (DE)
(72) Erfinder: Greiner-Perth, Jürgen, 78244 Gottmadingen (DE); Rey, Pia, 78315 Radolfzell (DE)
(74) Vertreter: Patentanwaltskanzlei Cartagena

(57) **Zusammenfassung**

Vorgeschlagen wird die Verwendung eines Schwimmers in einem Flüssigkeitsspender und einer Druck-Indikatoreinrichtung. Der Schwimmer verfügt über Luftkanäle, um hierdurch die mittlere Dichte zu reduzieren.

Dies ermöglicht eine flexiblere Nutzung verschiedener und insbesondere auch schwerer Kunststoffe, da durch die Luftkanäle die mittlere Dichte eines aus einem Kunststoff hergestellten Schwimmers reduziert werden kann.

## Beschreibung

### ANWENDUNGSGEBIET UND STAND DER TECHNIK

Die Erfindung betrifft einen Flüssigkeitsspender zum Austrag einer Flüssigkeit. Die Erfindung betrifft weiterhin auch eine Indikatoreinrichtung zur Erfassung eines Drucks einer Flüssigkeit.

Ein gattungsgemäßer Flüssigkeitsspender ist aus der EP 2 746 733 A1 bekannt. Solche gattungsgemäßen Spender sind ebenso wie erfindungsgemäße Spender für die Abgabe von Flüssigkeiten verschiedener Viskositäten geeignet. Die Hauptanwendungsfelder umfassen die Verwendung als Spender für pharmazeutische Flüssigkeiten wie beispielsweise Hustensaft, für kosmetische Flüssigkeiten wie Haarpflege- und Hautpflegeprodukte sowie für Lebensmittel wie Dips, Soßen, Ketchup, Senf und dergleichen.

Der aus der EP 2 746 733 A1 bekannte Flüssigkeitsspender weist ein Gehäuse sowie im Zusammenhang mit einer darin vorgesehenen Dosiervorrichtung einen Schwimmer auf, der im Bereich einer Austragöffnung angeordnet ist und zwischen einer Schließposition und einer Öffnungsposition verlagerbar ist. Das Wirkprinzip dieses aus der EP 2 746 733 A1 bekannten Flüssigkeitsspenders ist das Folgende: Der Schwimmer weist eine geringere Dichte als die auszutragende Flüssigkeit auf, so dass er gegen Beginn eines Austragvorgangs mit nach unten gerichteter Austragöffnung des Spenders eine maximal von der Austragöffnung beabstandete Position einnimmt. Wird nun durch Zusammendrücken des Gehäuses Flüssigkeit ausgetragen, so reißt der damit verbundene Flüssigkeitsstrom den Schwimmer gegen seine Auftriebskraft in Richtung der Austragöffnung mit. Nach dem Austrag einer in etwa konstanten Flüssigkeitsmenge erreicht der Schwimmer die Austragöffnung und verschließt diese, so dass der Austragvorgang beendet ist.

Die vorliegende Erfindung betrifft einen solchen Schwimmer, der bestimmungsgemäß zumindest phasenweise auf der Flüssigkeit in einem Flüssigkeitsspender schwimmt oder durch seine Auftriebskraft in Richtung der Oberfläche beaufschlagt wird. Neben dem oben skizzierten Anwendungsfall eines Schwimmers im Kontext einer Dosiervorrichtung kann ein solcher Schwimmer auch andere Anwendungszwecke übernehmen. Nachfolgend noch beschrieben ist die Möglichkeit, hierdurch eine besondere Form eines druckabhängig öffnenden und schließenden Ventils zu schaffen.

Wesentlich für einen gattungsgemäßen wie auch einen erfindungsgemäßen Schwimmer ist, dass er zumindest phasenweise eine geringere Dichte als die ihn umgebende Flüssigkeit aufweist, in der er bestimmungsgemäß aufsteigen soll. Der einfachste Ansatz, um dies zu erreichen, ist die Wahl eines Materials für den Schwimmer, welches als solches eine geringere Dichte als die Flüssigkeit aufweist. So gibt es beispielsweise recht leichte Kunststoffe, deren Dichte etwa 0,8 g/cm³ beträgt und die somit auf Flüssigkeiten mit der Dichte von Wasser (1 g/cm³) schwimmen können. Die Verwendbarkeit solcher Kunststoffe für Schwimmer ist jedoch eingeschränkt. So kann je nach Flüssigkeit auch eine Materialdichte von 0,8 g/cm³ zu hoch sein, um das Schwimmen eines Vollkörpers aus dem betreffenden Material zu gestatten. Zudem sind regulative Bestimmungen zu beachten, die die Auswahl zulässiger Kunststoffe für beispielsweise pharmazeutische Flüssigkeitsspender einschränkt.

Aus der zum Zeitpunkt der Einreichung der vorliegenden Anmeldung noch nicht veröffentlichten DE 10 2014 206 568 sind bereits Schwimmer bekannt, die aus einem Hohlkörper und einen den Hohlkörper verschließenden Stopfen bestehen. Durch den Hohlraum ist es möglich, einen als Ganzes sehr leichten Schwimmer aus vergleichsweise schwerem Kunststoff herzustellen, da das von diesem Schwimmer verdrängte Flüssigkeitsvolumen zum Teil von der im Hohlraum isolierten Luft verdrängt wird. Die Herstellung solcher zweiteiliger Schwimmer ist aufgrund des erforderlichen Montageschrittes jedoch vergleichsweise aufwendig, so dass sie nur für Spender eines höheren Stückpreises geeignet sind.

### AUFGABE UND LÖSUNG

Aufgabe der Erfindung ist es, zur Verwendung in einem gattungsgemäßen Flüssigkeitsspender oder einer Indikatoreinrichtung einen Schwimmer zur Verfügung zu stellen, der günstig herstellbar ist, ohne hierdurch enge Restriktionen bei der Auswahl des Werkstoffs zu erzwingen.

Erfindungsgemäß wird dies durch einen Flüssigkeitsspender nach Anspruch 1 erzielt. Dieser Flüssigkeitsspender weist in gattungstypischer Weise ein Gehäuse und einen darin angeordneten Schwimmer auf, der bestimmungsgemäß in Kontakt mit der Flüssigkeit steht, um auf dieser schwimmen zu können, und der gegenüber dem Gehäuse beweglich ist.

Ein Schwimmer im Sinne der Erfindung ist ein Körper, der bestimmungsgemäß zumindest zeitweise in der umgebenden Flüssigkeit durch statischen Auftrieb in Richtung der Oberfläche kraftbeaufschlagt und verlagert wird.

Der Schwimmer weist erfindungsgemäß mindestens einen Luftkanal auf, der an einer Außenkontur des Schwimmers offen ist. Der erfindungsgemäß vorgesehene Schwimmer verfügt also über einen von außen aus dem Bereich der Flüssigkeit offen zugänglichen Kanal, in dem Luft enthalten ist. Anders als bei bekannten Hohlkörpern, die für Schwimmer verwendet werden, ist das Volumen des Luftkanals jedoch nicht gegenüber der unmittelbaren Umgebung und somit der umströmenden Flüssigkeit isoliert. Es wurde jedoch festgestellt, dass dennoch bei geeigneter Auslegung des Luftkanals keine Flüssigkeit in diesen eindringt. Zumindest ein Teilvolumen des Luftkanals bleibt üblicherweise frei von Flüssigkeit. Wird der Luftkanal ausreichend schlank gestaltet, so bildet die umgebende Flüssigkeit im Einlassbereich des Luftkanals aufgrund ihrer Oberflächenspannung eine Oberfläche aus, die sich geringfügig in den Luftkanal erstrecken kann. Selbst wenn die Flüssigkeit in relevantem Maße in den Luftkanal eindringt, so kann bei schlanker Gestaltung des Luftkanals die Luft nicht gleichzeitig aus dem Kanal entweichen, so dass der Luftkanal zumindest zum Teil von Flüssigkeit freigehalten wird.

Das Volumen des mindestens einen Luftkanals oder zumindest ein flüssigkeitsfreier Teil davon verursacht einen Teil der Verdrängung des Schwimmers, ohne dabei in nennenswertem Maße zur Masse des Schwimmers beizutragen. Hieraus ergibt sich eine Dichte des Schwimmers einschließlich der Luftkanäle, die geringer ist als die Dichte der aus Vollmaterial bestehenden Teile des Schwimmers.

Aufgrund des geringen Durchmessers, den ein erfindungsgemäß vorgesehener Luftkanal aufweist, ist die durch den Luftkanal zusätzlich verdrängte Flüssigkeitsmenge gering. Es ist jedoch möglich und dürfte in den meisten Anwendungsfällen auch zweckmäßig sein, mehrere Luftkanäle vorzusehen, die gemeinsam das verdrängte Volumen des Schwimmers in relevantem Maße erhöhen, ohne in nennenswerter Weise zu seiner Masse beizutragen.

Der mindestens eine Luftkanal, der im Schwimmer vorgesehen ist, erstreckt sich vorzugsweise geradlinig. Zwar ist zur Vergrößerung des vom Luftkanal verdrängten Volumens grundsätzlich auch möglich, einen längeren Luftkanal zu nutzen, der nicht geradlinig geformt ist, sondern beispielsweise spiralförmig. Eine besonders einfache Herstellbarkeit, insbesondere mit dem nachfolgend noch beschriebenen Herstellungsverfahren, ist jedoch bei der genannten Geradlinigkeit gegeben. Da die Länge eines solchen geradlinigen Luftkanals durch die Maße des Schwimmers begrenzt ist, kann es insbesondere bei geradlinigen Luftkanälen von Vorteil sein, mehrere solcher Luftkanäle vorzusehen. Ebenfalls in Hinblick auf die einfache Herstellbarkeit ist es dann von Vorteil, wenn die mehreren Luftkanäle zueinander parallel angeordnet sind.

Je nach Geometrie des Schwimmers, dessen Außenkontur beispielsweise ein Volumen zwischen 30 und 1000 mm³ umgeben kann, kann durch enge Anbringung von Luftkanälen die Masse bei im Wesentlich gleichbleibender Außenkontur um 50% reduziert werden. Vorzugsweise weisen erfindungsgemäß vorgesehene Schwimmer eine Massereduktion zwischen 5% und 20% gegenüber der voll ausgefüllten Außenkontur (Vollmaterial) auf.

Wie bereits beschrieben, ist es für das erfindungsgemäße Funktionieren des Schwimmers erforderlich, dass die Flüssigkeit nicht in den Luftkanal eindringt und dort die Luft vollständig verdrängt, da der Luftkanal dann keinen Beitrag mehr zum vergrößerten Auftrieb des Schwimmers leisten könnte. Eine schlanke Ausgestaltung des Luftkanals bewirkt, dass es der Luft unmöglich ist, an der eindringenden Flüssigkeit vorbei zu entweichen.

Dies ist zwar auch dann möglich, wenn die Flüssigkeit geringfügig in den Kanal eindringt. Für die meisten Anwendungsfälle ist es jedoch von Vorteil, wenn aufgrund der Oberflächenspannung der Flüssigkeit ein Eindringen in den Kanal unterbunden wird. Dies kann dadurch begünstigt werden, dass der Querschnitt des mindestens einen Luftkanals zumindest in einem Einlassbereich an der Außenkontur des Schwimmers ohne scharfkantige Ecken ausgebildet ist. Ein beispielsweise quadratischer Querschnitt mit scharfkantigen Ecken ist demnach vermeidenswert. Unter scharfkantigen Ecken werden im Kontext der Erfindung solche verstanden, deren Krümmungsradius kleiner als 0,2 mm ist. Ideal sind Luftkanäle, deren Querschnitt im Einlassbereich eine kreisrunde oder elliptische Formgebung aufweist.

Welcher mittlere Querschnitt und welche Querschnittsform geeignet sind, hängt aus genanntem Grund von der Oberflächenspannung der Flüssigkeit abhängig. Der erfindungsgemäß vorgesehene Schwimmer wird vorzugsweise zur Verwendung mit Flüssigkeiten verwendet, deren Oberflächenspannung bei 20°C mindestens 0,02N/m beträgt, vorzugsweise mindestens 0,04N/m, insbesondere vorzugsweise mindestens 0,06N/m.

Die Formgebung des Luftkanals über seine Länge kann verschieden gestaltet sein. So ist der geometrisch einfachste Aufbau zu erreichen, wenn der Querschnitt des Luftkanals bis kurz vor dem Kanalgrund gleichbleibend ist und somit eine zylindrische Form bildet. Es sind jedoch auch verjüngende Formgebungen wie beispielsweise leicht kegelförmige bzw. kegelabschnittsförmige Formgebungen möglich und in Hinblick auf das Entformen bei der Herstellung auch vorteilhaft.

Von Vorteil ist es weiterhin, wenn der Luftkanal in Art einer Sackbohrung an einem Ende offen ist und am gegenüberliegenden Ende geschlossen ist. Das Entweichen der Luft und das Eindringen von Flüssigkeit werden hierdurch erschwert. Je nach Ausgestaltung sind jedoch auch Luftkanäle möglich, die zwei offene Enden aufweisen. Solche Luftkanäle können insbesondere dort Verwendung finden, wo die Gefahr eines Druckunterschiedes im Bereich beider offenen Enden sehr gering ist.

In Hinblick auf die konkreten Maße wird vorgeschlagen, dass der mittlere Durchmesser des mindestens einen Luftkanals maximal 3 mm beträgt, vorzugsweise maximal 2 mm, insbesondere vorzugsweise maximal 1,5 mm. Der mittlere Durchmesser ist dabei jener Durchmesser, den ein Flüssigkeitskanal mit kreiszylindrischer Form und gleicher Tiefe sowie gleichem Innenvolumen hätte. Der konkrete maximale Durchmesser des Luftkanals, der Eindringen von Flüssigkeit wirksam verhindert, hängt in hohem Maße auch von den zu erwartenden Drücken und der Oberflächenspannung der Flüssigkeit ab. Luftkanäle eines Durchmessers von 3 mm sind nur bei recht hochviskosen Flüssigkeiten geeignet, zuverlässig ein Eindringen der Flüssigkeit zu verhindern. Im Falle von Flüssigkeiten, deren Oberflächenspannung mit der von Wasser vergleichbar ist, beträgt der mittlere Durchmesser vorzugsweise weniger als 2 mm. Ein sehr zuverlässiges Verhalten zeigt sich, wenn der Luftkanal einen mittleren Durchmesser von 1 mm oder weniger aufweist.

Die Länge des Luftkanals sollte mindestens 1 mm betragen. Vorzugsweise ist er jedoch länger, insbesondere vorzugsweise mindestens 2 mm oder gar mindestens 5 mm lang. Die konkrete Länge hängt naturgemäß auch davon ab, wie viele Luftkanäle vorgesehen sind und welches Volumen durch diese verdrängt werden soll.

Vorzugsweise ist der mittlere Durchmesser mindestens so groß wie die Tiefe des Luftkanals.

Als Material für den Schwimmer kommen grundsätzlich alle Materialien in Betracht, die unter Nutzung der erfindungsgemäß vorgesehenen Luftkanäle eine mittlere Dichte aufweisen, die geringer als die umströmende Flüssigkeit ist. So kann beispielsweise auch ein Schwimmer aus Aluminium gefertigt sein, wenn dieser derart eng mit Luftkanälen versehen ist, dass diese etwa 2/3 des durch die Außenkontur des Schwimmers definierten Volumens bilden. Ein solcher Schwimmer hätte insgesamt nur noch eine mittlere Dichte von etwa 0,9 g/cm³ und wäre somit auf Wasser schwimmfähig.

Dennoch ist es für die meisten Anwendungszwecke von Vorteil, wenn der Schwimmer vollständig oder zumindest abschnittsweise aus Kunststoff gefertigt ist, wobei insbesondere jene Teile des Schwimmers aus Kunststoff gefertigt sein sollten, in denen die Luftkanäle vorgesehen sind. Die Herstellungskosten für die Fertigung des Schwimmers aus Kunststoff sind gering.

Zur Verwendung in günstigen Flüssigkeitsspendern ist es von Vorteil, wenn der Schwimmer einstückig ausgebildet und aus Kunststoff gefertigt ist. Solche Schwimmer können in großer Zahl und hoher Geschwindigkeit mittels Spritzguss hergestellt werden.

Bevorzugte Materialien für einen Schwimmer aus Kunststoff sind Polyethylen (PP) und Polypropylen (PE).

Was die konkrete Verwendung des Schwimmers angeht, so wird insbesondere vorgeschlagen, den Schwimmer der beschriebenen Art in einem Flüssigkeitsspender zu verwenden, der über einen Dosierkopf verfügt. Ein solcher Flüssigkeitsspender umfasst eine Austragöffnung zur Abgabe der Flüssigkeit aus dem Dosierkopf in eine den Spender umgebende Umgebung. Der Schwimmer ist hierbei innerhalb eines Dosierkanals angeordnet und in diesem zwischen einer Schließstellung und einer Öffnungsstellung beweglich. Er ist derart an den Dosierkanal angepasst, dass er bei der Bewegung in Richtung der Schließstellung von zur Austragöffnung strömender Flüssigkeit umströmt wird. In der Schließstellung verschließt er die Austragöffnung gegenüber dem Dosierkanal.

Hierdurch vorgeschlagen wird also die Verwendung eines Schwimmers der beschriebenen Art in einem Spender der grundsätzlichen Wirkweise, wie er aus der EP 2 746 733 A1 bekannt ist.

Während bei einem solchen Flüssigkeitsspender bestimmungsgemäß vorgesehen ist, dass der Schwimmer gemeinsam mit der ausströmenden Flüssigkeit in Richtung der Austragöffnung verlagert wird und hierbei gegen seine Auftriebskraft bis zur Austragöffnung gelangt, ist auch eine anderweitige Gestaltung denkbar, die baulich ähnlich ist, jedoch einen deutlich anderen Zweck erfüllt.

Ein solcher alternativer Flüssigkeitsspender verfügt über ein druckabhängig öffnendes und schließendes Ventil, welches seinerseits über einen Ventilsitz und einen gegenüber dem Ventilsitz zwischen einer Schließstellung und einer Öffnungsstellung beweglichen Ventilkörper verfügt. Dabei ist dieser Ventilkörper als Schwimmer der beschriebenen Art ausgestaltet oder mit einem solchen Schwimmer mechanisch gekoppelt.

Das Prinzip bei einem solchen Flüssigkeitsspender basiert darauf, dass der Schwimmer mit dem erfindungsgemäß vorgesehenen Luftkanal als Ganzes eine mittlere Dichte aufweist, die vom Druck der Flüssigkeit abhängt, da bei höherem Druck die Flüssigkeit vom offenen Ende aus in den Luftkanal bzw. die Luftkanäle eindringen kann und die darin enthaltene Luft komprimiert, so dass nur noch das verbleibende Volumen der komprimierten Luft flüssigkeitsverdrängend wirkt. Wird die Flüssigkeit unter einen Druck gesetzt, der so groß ist, dass die mittlere Dichte des Schwimmers höher ist als die der Flüssigkeit, so sinkt der Schwimmer in der Flüssigkeit ab. Da der Schwimmer den Ventilkörper bildet oder steuert, kann hierdurch erreicht werden, dass der Ventilkörper bei hohem Druck der Flüssigkeit gravitationsbedingt auf den Ventilsitz hinabsinkt und dadurch das Ventil schließt.

Der Flüssigkeitsspender gemäß dieser Weiterbildung erlaubt somit einen Flüssigkeitsaustrag nur bis zu einem durch die Konfiguration des Schwimmers vorgegebenen Grenzdruck. Dies kann sinnvoll sein, um beispielsweise zu gewährleisten, dass Flüssigkeit nur unter geringem Überdruck ausgetragen wird. Dies kann weiterhin auch mit einem klassischen Überdruckventil kombiniert sein, welches erst ab einem bestimmten Flüssigkeitsdruck öffnet, so dass hierdurch ein Spender möglich wird, der nur in einem definierten Druckintervall einen Flüssigkeitsaustrag gestattet.

Zur Verwendung mit einer im Flüssigkeitsspender enthaltenen Flüssigkeit wird insbesondere vorgeschlagen, einen Schwimmer zu verwenden, der aus einem Material mit einer höheren Dichte als der der Flüssigkeit besteht. Bei einem solchen Schwimmer wird durch den mindestens einen Luftkanal die Schwimmfähigkeit hergestellt. Es kann jedoch auch sinnvoll sein, einen Schwimmer aus einem Material mit gegenüber der Flüssigkeit geringerer Dichte zusätzlich mit Luftkanälen zu versehen, um die auf ihn wirkende Auftriebskraft noch zu vergrößern und somit eine schnelle Bewegung zu gestatten oder die Verrichtung zusätzlicher mechanischer Arbeit zu ermöglichen.

Das genannte Prinzip des Schwimmers, der bei hohem Druck seine Schwimmfähigkeit verliert und in der Flüssigkeit absinkt, wird auch bei einer erfindungsgemäßen Indikatoreinrichtung verwendet, die beispielsweise bei einem Flüssigkeitsspeicher Verwendung finden kann.

Diese Indikatoreinrichtung verfügt über einen Druckraum zur Aufnahme von Flüssigkeit und über einen Schwimmer mit mindestens einem Luftkanal, der im Druckraum angeordnet ist. Für den Schwimmer gelten dabei alle oben genannten Gestaltungsmöglichkeiten, die auch für einen Schwimmer in einem erfindungsgemäßen Flüssigkeitsspender gelten.

Bei einer solchen erfindungsgemäßen Indikatoreinrichtung wechselt der Schwimmer in Abhängigkeit des Drucks seine Position im Druckraum. Somit kann erfasst werden, ob der Druck unterhalb oder oberhalb eines Grenzwertes liegt. Durch ein Sichtfenster in den Druckraum kann ein Bediener somit einfach den Druckzustand erkennen. Dies stellt somit eine Alternative zum oben beschriebenen Ventil dar. Ein Flüssigkeitsaustrag bei zu hohem Druck wird nicht verhindert, jedoch angezeigt.

Ein wesentlicher Vorteil des hier beschriebenen Schwimmers liegt in der bereits erwähnten vorteilhaften Herstellbarkeit. Zur Herstellung des Schwimmers wird vorgeschlagen, dass diese Herstellung durch ein Guss- oder Spritzgussverfahren erfolgt, bei dem mindestens zwei Formenteile Verwendung finden, die gemeinsam eine Kavität definieren, in die verflüssigtes Material für den Schwimmer eingebracht wird, welches in der Kavität aushärtet und somit den Schwimmer bildet. Damit hierbei der Luftkanal bzw. die Luftkanäle frei von Material bleiben, ist an mindestens einem der beiden Formenteile mindestens ein dornartiger Fortsatz vorgesehen, der die Negativform des Luftkanals bildet.

Die mindestens zwei Formenteile werden nach Aushärten des Schwimmers innerhalb der Kavität in einer Beabstandungsrichtung voneinander getrennt, wobei diese Beabstandungsrichtung mit der Ausrichtung des mindestens einen dornartigen Fortsatzes übereinstimmt. Nach dem Öffnen der Formenteile kann somit der Schwimmer einfach entnommen werden, da keine Hinterschneidungen oder dergleichen dies verhindert.

Das Verfahren gestattet die Herstellung eines Schwimmers in nur einem Schritt, ohne dass ein nachfolgender Montagevorgang wie bei den bekannten zweiteiligen Schwimmern erforderlich wird.

Die Verwendung von Luftkanälen zur Erzeugung eines Schwimmers mit einer passenden mittleren Dichte gestattet es insbesondere auch, Werkzeuge zur Erstellung des Schwimmers einfach zur fallweisen oder chargenweisen Konfiguration solcher Schwimmer veränderbar zu gestalten. Es wird als vorteilhaft angesehen, wenn zu diesem Zweck eines der Formenteile zur fallweisen Anpassung der herzustellenden Schwimmer in Hinblick auf die Anzahl und/oder in Hinblick auf die Formgebung und/oder in Hinblick auf die Tiefe der Luftkanäle konfigurierbar ist.

Dies kann dadurch erzielt werden, dass fallweise verschieden viele oder verschieden geformte Dorne zum Freihalten der Luftkanäle Verwendung finden. Das Werkzeug kann so ausgestaltet sein, dass einzelne Dorne einfach ergänzt bzw. entnommen werden können. Hierdurch ist auch der Austausch von Dornen gegen andere Dornen größerer Länge oder anderer Formgebung möglich. Auch ist es möglich, Dorne beispielsweise mittels eines Gewindes einstellbar zu gestalten, so dass diese verschieden tief in die Kavität hineinragen können.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
Fig. 1A und 1B zeigen eine erste Ausführungsform eines erfindungsgemäßen Spenders.
Fig. 1C und 1D zeigen den Schwimmer des Spenders gemäß Fig. 1A und 1B in separater Darstellung.
Fig. 2 zeigt verschiedene Varianten zur Ausgestaltung von Luftkanälen in einem Schwimmer.
Fig. 3 zeigt eine zweite Ausführungsform eines erfindungsgemäßen Spenders.
Fig. 4A und 4B zeigen eine erfindungsgemäße Indikatoreinrichtung an einem erfindungsgemäßen Flüssigkeitsspender.
Fig. 5A bis 5C zeigt das Herstellungsverfahren zur Herstellung des Schwimmers für den Spender der Fig. 2.

### DETAILLIERTE BESCHREIBUNG DER AUSFÜHRUNGSBEISPIELE

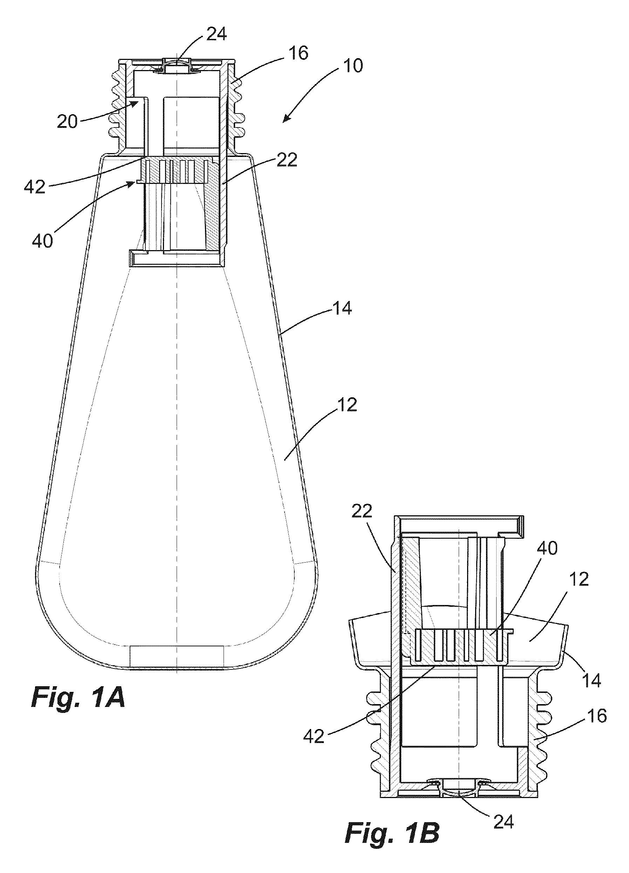

Die Fig. 1A und 1B zeigen einen erfindungsgemäßen Spender in einer geschnittenen Seitenansicht. Dieser Spender 10 verfügt über einen Flüssigkeitsspeicher 12. In ein Gehäuse 14 des Spenders 10, welches als Quetschflasche ausgebildet ist, ist im Bereich eines Flaschenhalses 16 eine Dosiereinrichtung 20 eingesetzt.

Diese Dosiereinrichtung 20 verfügt über einen seitlich offenen Käfig 22, der in den Flüssigkeitsspeicher 12 hineinragt und innerhalb dessen ein Schwimmer 40 verschieblich gelagert ist. In Fig. 1A ist der Schwimmer 40 in seiner einer Austragöffnung 24 abgewandten Endlage dargestellt. Er ist bis zu einer gegenüberliegenden Endlage beweglich, in der eine Anlagefläche 42 des Schwimmers 40 die Austragöffnung 24 verschließt.

Die Funktionsweise des Spenders der Fig. 1A und 1B ist die Folgende: In einer Überkopflage, wie sie in Fig. 1B dargestellt ist, nimmt der Schwimmer 40 zunächst jene obere Endlage Position ein, die in Fig. 1B dargestellt ist. Da er eine geringere Dichte als die auszutragende Flüssigkeit aufweist, wird er durch die Auftriebskraft in diese Position verbracht. Wenn durch Zusammendrücken des Gehäuses 14 die Flüssigkeit im Flüssigkeitsspeicher 12 unter Druck gesetzt wird, strömt diese in Richtung der Austragöffnung 24 und reißt dabei den Schwimmer 40 mit. Dieser wird gegen die Auftriebskraft innerhalb des Käfigs 22 in Richtung der Austragöffnung 24 gedrückt. Sobald die Anlagefläche 42 von innen die Austragöffnung 24 verschließt, endet der Austragvorgang.

Die Besonderheit bei dem Spender gemäß Fig. 1A und 1B liegt in der Ausgestaltung des Schwimmers 40. Da dieser Schwimmer 40 bestimmungsgemäß zu Beginn eines Austragsvorgang auf der Flüssigkeit im Flüssigkeitsspender 12 schwimmen können soll oder zumindest soweit als möglich aufsteigen soll (statischer Auftrieb), dennoch jedoch bei einem Austrag gegen die entsprechende Auftriebskraft durch die Strömung in der Flüssigkeit in Richtung der Austragöffnung 24 verlagert werden soll (dynamischer Abtrieb), spielt die spezifische Dichte des Schwimmers 40 eine erhebliche Rolle. Diese Dichte muss geringer sein als die der auszutragenden Flüssigkeit. Ist sie jedoch zu gering, so vermag die Flüssigkeitsströmung den Schwimmer 40 nicht gegen diese Auftriebskraft bis zur Austragöffnung 24 zu bewegen.

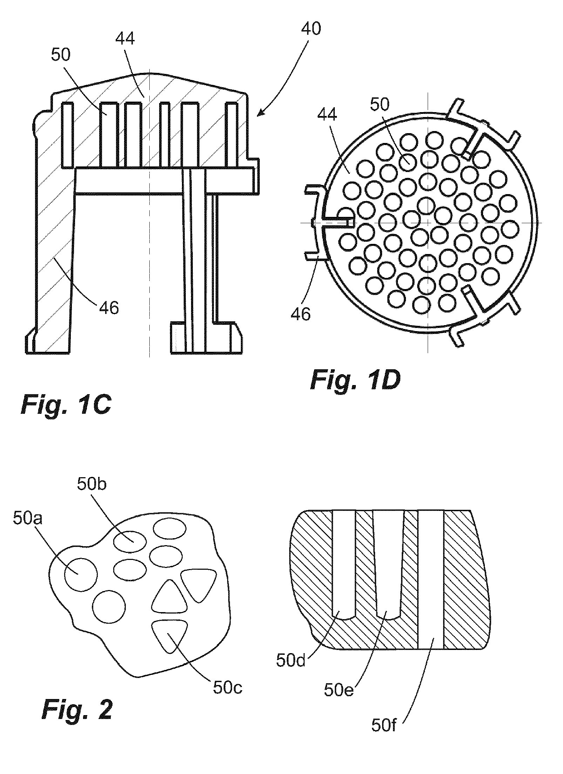

Um die spezifische Dichte besonders genau beeinflussen zu können, ist der Schwimmer 40 in der in den Fig. 1C und 1D verdeutlichten Weise ausgestaltet. Der Schwimmer 40 verfügt über einen Hauptkörper 44 sowie drei Führungsrippen 46, die mit dem Käfig 22 den Schwimmer 40 führend zusammenwirken.

Im Hauptkörper 44 sind etwa fünfzig Luftkanäle 50 vorgesehen, die jeweils einen Durchmesser von ca. 0,8 mm und eine Tiefe von ca. 5 mm aufweisen. Gemeinsam reduzieren sie die Masse des Schwimmers 40 gegenüber einem gedachten Schwimmer ohne solche Luftkanäle 50 um etwa 20%. Dennoch ist auch das Volumen der Luftkanäle 50 in Hinblick auf Auftriebskräfte auf den Schwimmer 40 wirksam, da die Flüssigkeit im Spender aufgrund ihrer Oberflächenspannung nicht oder zumindest nicht vollständig in die Luftkanäle 50 eindringt.

Somit werden die Schwimmeigenschaften des Schwimmers 40 dadurch verbessert, dass die Luftkanäle 50 zwar das effektiv verdrängte Flüssigkeitsvolumen beeinflussen, auf die Masse und somit die mittlere Dichte des Schwimmers 40 aufgrund der vernachlässigbaren Masse von Luft keinen Einfluss haben.

Die Luftkanäle 50 sind auf der der Austragöffnung 24 abgewandten Seite des Hauptkörpers 44 vorgesehen. Eine solche Anordnung ist jedoch nicht zwingend. Sie könnten sich stattdessen auch von der gegenüberliegenden Seite oder auch vom umlaufenden Rand aus in den Hauptkörper erstrecken.

Im Falle des Schwimmers 40, der separat in den Fig. 1C und 1D dargestellt ist, sind die Luftkanäle mit kreisrunder Querschnittsfläche (50a) und zylindrischer Erstreckung (50d) vorgesehen. Wie den Fig. 2A und 2B zu entnehmen ist, können jedoch auch andere Querschnittsformen wie elliptische Querschnitte (50b) oder anderweitige Querschnittsformen (50c), vorzugsweise ohne scharfe Kanten, Verwendung finden. Auch kann statt der zylindrischen Formgebung (50d) eine sich konisch verjüngende Formgebung (50e) vorgesehen sein, um die Entformung während der Herstellung zu erleichtern. Für manche Anwendungsfälle eignet sich auch die Gestaltung mit den Schwimmer vollständig durchdringenden Luftkanälen (50f).

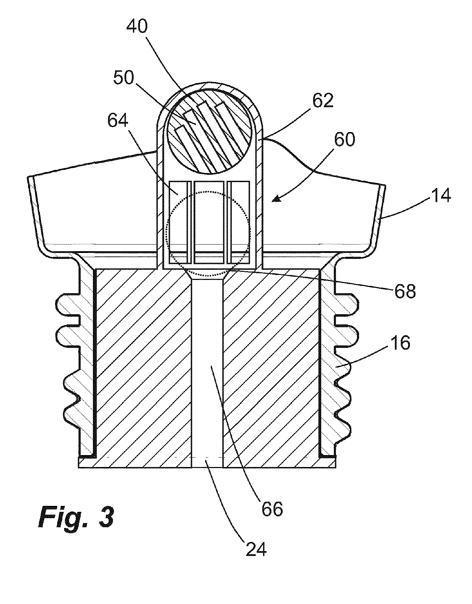

Fig. 3 zeigt eine alternative Gestaltung eines Spenders, die baulich ähnlich der Gestaltung der Fig. 1A und 1B gestaltet ist, jedoch in der Funktionsweise einen deutlichen Unterschied aufweist. Bei dieser Gestaltung ist in den Flaschenhals eine besondere Form eines druckabhängig schaltenden Ventils 60 eingesetzt. Dieses Ventil 60 verfügt über einen Käfig 62, der von Zuflusskanälen 64 durchdrungen ist, so dass Flüssigkeit aus dem Flüssigkeitsspeicher 12 durch einen Kanal 66 zur Austragöffnung 24 gelangen kann. Im Käfig 62 ist wiederum ein Schwimmer 40 angeordnet, der in ähnlicher Art wie der Schwimmer der Fig. 1C und 1D mit Luftkanälen 50 versehen ist.

Anders als bei der Gestaltung der Fig. 1A und 1B wird dieser Schwimmer jedoch nicht mit der Flüssigkeit mitgerissen, wenn diese zur Austragöffnung 24 strömt, da der Schwimmer sich nicht unmittelbar im Strömungspfad befindet.

Stattdessen dient dieser Schwimmer dem Verschließen der Austragöffnung, wenn mit zu hohem Druck Flüssigkeit ausgetragen wird. Wird das Gehäuse 14 des Spenders so sehr zusammengedrückt, dass der Druck im Flüssigkeitsspeicher 12 einen bestimmten Grenzdruck überschreitet, so dringt die Flüssigkeit in die Luftkanäle 50 des Schwimmers 40 ein und komprimiert die darin befindliche Luft. Da hierdurch das durch den Schwimmer 40 verdrängte Volumen geringer wird, steigt auch seine mittlere Dichte. Der Schwimmer 40 ist so an die auszutragende Flüssigkeit angepasst, dass diese Erhöhung der mittleren Dichte des Schwimmers 40 ausreicht, um eine höhere Dichte als die der Flüssigkeit zu erzielen. Ist daher der Druck im Flüssigkeitsspeicher 12 ausreichend hoch, so sinkt der Schwimmer 40 aus seiner Ausgangsposition der Fig. 3 ab und kommt in Kontakt mit einem am unteren Ende des Käfigs 62 vorgesehenen Ventilsitz 68, wie durch die gepunktete Darstellung des Ventilkörpers 40 in Fig. 3 verdeutlich wird. Der Austragvorgang endet somit. Erst wenn der Druck in der Flüssigkeit sinkt, sinkt auch wieder die spezifische Dichte des Schwimmers 40, so dass dieser wieder aufsteigt und einen Flüssigkeitsaustrag wiederum gestattet.

Statt des unmittelbaren Schließens des Ventils durch den Schwimmer kann alternativ vorgesehen sein, dass der Schwimmer mittelbar über eine mechanische Kopplung einen separaten Ventilkörper verlagert.

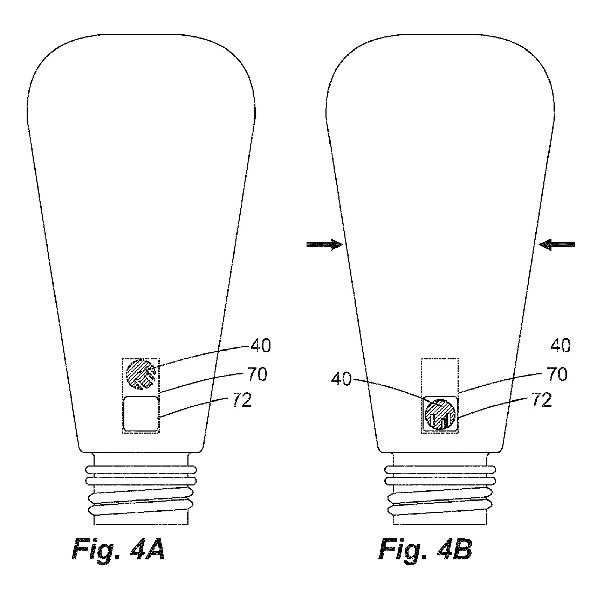

Die Fig. 4A und 4B zeigen einen Flüssigkeitsspender, bei dem dieses zu Fig. 3 erläuterte druckabhängig unterschiedliche Verhalten des Schwimmers 40 anderweitig genutzt wird. Hier ist der Schwimmer 40 in einem den Austragvorgang nicht beeinflussenden Bereich innerhalb eines nur schematisch angedeuteten Käfigs 70 gefangen, innerhalb dessen er begrenzt beweglich ist zwischen einer Position, in der er von außen nicht gesehen werden kann (Fig. 4A), und einer Position, in der der Schwimmer 40 durch ein Sichtfenster 72 von außen erkennbar ist.

In der Überkopflage des Spenders nimmt der Schwimmer 40 die von außen nicht sichtbare obere Position ein, solange der Druck im Flüssigkeitsspeicher unterhalb eines bestimmten Grenzwertes bleibt. Wird das Gehäuse des Spenders stark zusammengedrückt, so erhöht sich ähnlich wie bei der Ausgestaltung der Fig. 3 unter dem erzeugten Druck die Flüssigkeitsmenge, die in die Luftkanäle 50 eindringt, so dass die spezifische Dichte des Schwimmers 40 steigt und der Schwimmer absinkt. Er gelangt dadurch in einen Bereich, in dem er durch das Sichtfenster 72 hindurch gesehen werden kann. Dies stellt eine Mitteilung an den Benutzer dar, dass er einen zu hohen Druck ausübt. Er kann diesen Druck somit wieder absenken, um die richtige Form des Flüssigkeitsaustrags zu gewähren. Dass der Druck ausreichend weit abgesenkt wurde, zeigt der Schwimmer 40 dadurch an, dass er wieder die Position der Fig. 4A einnimmt.

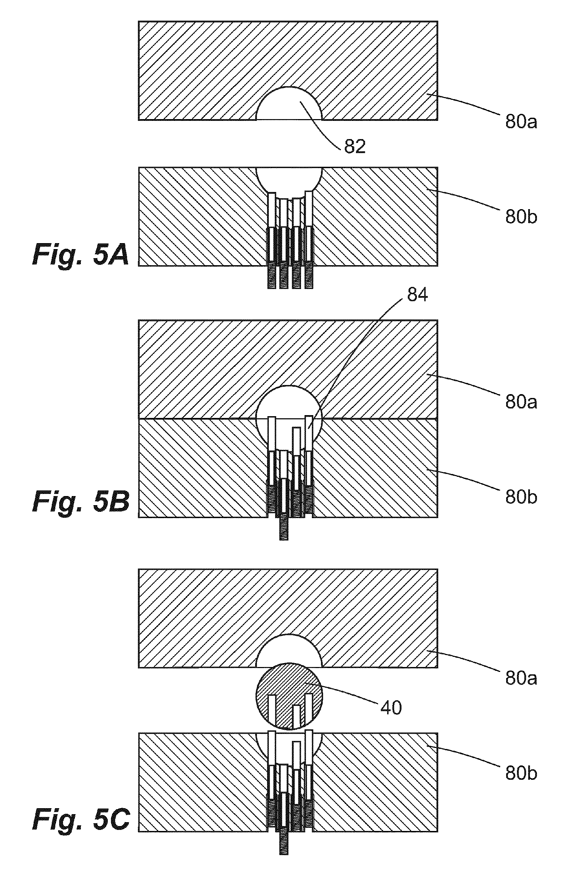

Fig. 5A bis 5C zeigen schematisch das Herstellungsverfahren für einen Schwimmer der beschriebenen Art. Fig. 5A zeigt in vereinfachter Darstellung das Werkzeug, welches zwei Formenteile 80a, 80b aufweist, die gemeinsam eine Kavität 82 definieren. In diese Kavität wird während des Herstellungsprozesses flüssiger Kunststoff eingebracht, der dort auskühlt und aushärtet und im ausgehärteten Zustand den Schwimmer 40 bildet.

Um das Vorhandensein und die Konfiguration von Luftkanälen 50 im herzustellenden Schwimmer zu beeinflussen, sind Dorne 84 vorgesehen, welche am unteren Formenteil 80b angeordnet sind und in der durch Fig. 3B verdeutlichten Weise tiefer in das Formenteil 80b eingeschraubt werden können, um sich hierdurch auch tiefer in die Kavität 82 zu erstrecken. Auf diese Art und Weise kann eine individuelle Konfiguration des Schwimmers erzielt werden, insbesondere um dessen Verhalten im Spender oder eine Indikatoreinrichtung zu beeinflussen und um die Verwendung des gleichen Kunststoffes durch eine unterschiedliche Luftkanalkonfiguration für verschiedene Flüssigkeiten zu gestatten. Nach Herstellung einer Konfiguration, wie sie exemplarisch in Fig. 5B dargestellt ist, wird die Kavität 82 in bereits genannter Weise mit flüssigem Kunststoff befüllt, der in der durch Fig. 5C verdeutlichten Weise nach dem Aushärten den Schwimmer 40 mit der zuvor über die Dorne 84 eingestellten Konfiguration bildet. Da die Ausrichtung der Dorne 84 und die Entformungsrichtung übereinstimmen, ist die Entformung des Schwimmers 40 unproblematisch.

## Patentansprüche

1. Flüssigkeitsspender (10) zum Austrag einer Flüssigkeit, insbesondere einer pharmazeutischen oder kosmetischen Flüssigkeit oder eines flüssigen Lebensmittels, mit den folgenden Merkmalen:
a. der Flüssigkeitsspender (10) weist ein Gehäuse (14) auf und
b. der Flüssigkeitsspender (10) weist einen im Gehäuse (14) angeordneten Schwimmer (40) zur Beeinflussung des Flüssigkeitsaustrags auf, auf den im Betrieb Flüssigkeit einwirkt, und
c. der Schwimmer (40) ist gegenüber dem Gehäuse (14) beweglich,
**gekennzeichnet durch** die folgenden Merkmale
d. der Schwimmer (40) weist mindestens einen zu einer Außenkontur des Schwimmers (40) hin offenen Luftkanal (50) auf.

2. Flüssigkeitsspender (10) nach Anspruch 1 mit dem folgenden Merkmal:
a. der mindestens eine Luftkanal (50) ist geradlinig ausgebildet,
vorzugsweise ergänzt um das folgende Merkmal:
b. es ist eine Mehrzahl von Luftkanälen (50) vorgesehen, die sich parallel zueinander erstrecken.

3. Flüssigkeitsspender (10) nach einem der vorstehenden Ansprüche mit den folgenden Merkmalen:
a. der Querschnitt des mindestens einen Luftkanals (50) ist zumindest in einem Einlassbereich des Luftkanals ohne scharfkantige Ecken ausgebildet und weist vorzugsweise eine kreisrunde oder elliptische Formgebung auf und/oder
b. der mindestens eine Luftkanal (50) weist als Ganzes oder abschnittsweise eine zylindrische, kegelabschnittsförmige, kegelförmige oder eine anderweitig sich verjüngende Formgebung auf.

4. Flüssigkeitsspender (10) nach einem der vorstehenden Ansprüche mit dem folgenden Merkmal:
a. der mindestens eine Luftkanal (50) ist an einem Ende offen und am gegenüberliegenden Ende geschlossen.

5. Flüssigkeitsspender (10) nach einem der vorstehenden Ansprüche mit den folgenden Merkmalen:
a. der mittlere Durchmesser des mindestens einen Luftkanals (50) beträgt maximal 3 mm, vorzugsweise maximal 2 mm, insbesondere vorzugsweise maximal 1,5 mm, und/oder
b. die Länge des mindestens einen Luftkanals (50) beträgt mindestens 1 mm, vorzugsweise mindestens 2 mm, insbesondere vorzugsweise mindestens 5 mm.

6. Flüssigkeitsspender (10) nach einem der vorstehenden Ansprüche mit dem folgenden Merkmal:
a. der mittlere Durchmesser des mindestens einen Luftkanals (50) ist geringer als die Tiefe des mindestens einen Luftkanals (50).

7. Flüssigkeitsspender (10) nach einem der vorstehenden Ansprüche mit dem folgenden Merkmal:
a. der Schwimmer (40) ist zumindest abschnittsweise aus Kunststoff gefertigt, wobei insbesondere ein Teilabschnitt des Schwimmers (40) aus Kunststoffs gefertigt ist, in dem die Luftkanäle (50) vorgesehen sind,
ergänzt vorzugsweise um das folgende Merkmal:
b. der Schwimmer (40) ist einstückig aus dem Kunststoff gefertigt.

8. Flüssigkeitsspender nach einem der vorstehenden Ansprüche mit den folgenden Merkmalen:
a. der Flüssigkeitsspender (10) umfasst eine Dosiereinrichtung (20),
b. der Flüssigkeitsspender (10) umfasst mindestens eine Austragöffnung (24) zur Abgabe von Flüssigkeit aus der Dosiereinrichtung (20) in eine Umgebung, und
c. der Schwimmer (40) ist in einem Dosierkanal angeordnet, innerhalb dessen er zwischen einer Schließstellung und einer Öffnungsstellung beweglich angeordnet ist, und
d. der Schwimmer (40) ist derart an den Dosierkanal angepasst, dass er bei der Bewegung in Richtung der Schließstellung zumindest phasenweise von zur Austragöffnung (50) strömender Flüssigkeit umströmt werden kann, und
e. der Schwimmer (40) ist derart an die Austragöffnung (50) angepasst, dass er in seiner Schließstellung die Austragöffnung (50) gegenüber dem Dosierkanal verschließt.

9. Flüssigkeitsspender (10) nach einem der Ansprüche 1 bis 7 mit den folgenden Merkmalen:
a. der Flüssigkeitsspender (10) umfasst ein druckabhängig schaltendes Ventil (60) und
b. das Ventil (60) verfügt über einen Ventilsitz (68) und einen gegenüber dem Ventilsitz zwischen Schließstellung und einer Öffnungsstellung beweglichen einer Ventilkörper, und
c. der Ventilkörper umfasst den Schwimmer (40).

10. Flüssigkeitsspender (10) nach einem der vorstehenden Ansprüche mit mindestens einem der folgenden Merkmale:
a. der Flüssigkeitsspender (10) weist einen Käfig (22) auf, in dem der Schwimmer (40) geführt beweglich ist,
b. die Masse des Schwimmers (40) durch den mindestens einen Luftkanal (50) gegenüber einem Vollkörper gleicher Außenkontur um mindestens 5%, vorzugsweise mindestens um 10% und insbesondere vorzugsweise um 15% reduziert ist,
c. der Flüssigkeitsspender (10) ist mit einer Flüssigkeit befüllt, deren Oberflächenspannung bei 20°C mindestens 0,02N/m beträgt, vorzugsweise mindestens 0,04N/m, insbesondere vorzugsweise mindestens 0,06N/m,
d. der Flüssigkeitsspender (10) ist mit einer Flüssigkeit befüllt, die eine Dichte von 0,5 bis 3,0 g/cm³ aufweist, vorzugsweise von 0,7 bis 1,5 g/cm³, insbesondere vorzugsweise 0,9 bis 1,2 g/cm³,
e. der Flüssigkeitsspender (40) weist eine Quetschflasche auf, die zum Austrag von Flüssigkeit bestimmungsgemäß zusammengedrückt wird, um den Druck im Flüssigkeitsspeicher zu erhöhen,
f. der Flüssigkeitsspeicher weist ein Volumen von maximal 1000ml auf, vorzugsweise von maximal 200ml, insbesondere vorzugsweise von maximal 50ml.
g. der Schwimmer (40) ist aus einem Material gefertigt, das eine Dichte von 0,5 bis 3,0 g/cm³ aufweist, vorzugsweise von 0,7 bis 2,0 g/cm³, insbesondere vorzugsweise 0,9 bis 1,3 g/cm³,
h. der mindestens eine Luftkanal ist als Durchgangskanal ausgebildet,
i. das Ventil (60) wird zusammen mit einem weiteren Ventil verwendet, welches bei Überdruck öffnet,

11. Indikatoreinrichtung zur Erfassung des Drucks einer Flüssigkeit mit den folgenden Merkmalen:
a. die Indikatoreinrichtung weist einen Druckraum zur Aufnahme von Flüssigkeit auf und
b. die Indikatoreinrichtung weist einen im Druckraum angeordneten Schwimmer (40) auf und
c. der Schwimmer (40) weist mindestens einen Luftkanal (50) auf.

12. Verfahren zur Herstellung eines Schwimmers (40) zur Verwendung in einer Vorrichtung nach einem der vorstehenden Ansprüche mit den Merkmalen:
a. die Herstellung erfolgt durch ein Guss- oder Spritzgussverfahren mit mindestens zwei Formenteilen (80a, 80b), die gemeinsam eine Kavität (82) definieren, in die verflüssigtes Material für den Schwimmer (40) eingebracht wird, und
b. an mindestens einem der Formenteile (80b) ist mindestens ein dornartiger Fortsatz (84) vorgesehen, durch den der Luftkanal (50) des Schwimmers (40) von dem Material freigehalten wird.

13. Verfahren zur Herstellung eines Schwimmers (40) nach Anspruch 11 mit dem Merkmal:
a. die Herstellung erfolgt mit einem Formenteil (80b), welches zum Zwecke der Anpassung des Schwimmers (40) in Hinblick auf die Anzahl und/oder in Hinblick auf die Formgebung und/oder in Hinblick auf die Tiefe der Luftkanäle (50) konfigurierbar ist.
